# EUROPÄISCHE PATENTSCHRIFT

(11) **EP 1 894 761 B1**
(45) Veröffentlichungstag und Bekanntmachung des Hinweises auf die Patenterteilung: **28.10.2009**
(21) Anmeldenummer: 07013349.1
(22) Anmeldetag: 07.07.2007
(51) Int. Cl.: B60K 6/24, B60W 20/00

(54) **Verfahren zur Steuerung eines Antriebsstranges eines Kraftfahrzeuges**
Method for contolling the power train of a motor vehicle
Procédé destiné à l commande d'une chaîne cinematique d'un véhicule automobile

(30) Priorität: 31.08.2006 DE 102006040945
(43) Veröffentlichungstag der Anmeldung: 05.03.2008
(73) Patentinhaber: Volkswagen Aktiengesellschaft, 38436 Wolfsburg (DE)
(72) Erfinder: Kruse, Georg, 38518 Gifhorn (DE); Lösche-Ter Horst, Tobias, 38444 Wolfsburg (DE)

(56) Entgegenhaltungen:
- DE-A1- 19 733 106
- DE-A1-102005 012 864
- US-A1- 2001 017 227
- US-B1- 6 845 305

## Beschreibung

Die Erfindung betrifft ein Verfahren zur Steuerung eines Antriebsstranges eines Kraftfahrzeuges gemäß dem Oberbegriff des Patentanspruchs 1.

Ein gattungsgemäßes Verfahren wird beschrieben in der DE 10 2005 012 864 A1. In diesem Dokument werden Steuerungsstrategien für Automatikgetriebe beschrieben, die Bestandteil eines Hybrid-Antriebsstranges sind, der als Antriebsquellen einen Verbrennungsmotor und einen Elektromotor aufweist. Es wird eine Strategie vorgeschlagen, die zur Festlegung der jeweiligen Schaltpunkte berücksichtigt, ob der Verbrennungsmotor allein oder in Kombination mit dem Elektromotor betrieben wird. Diese Schrift berücksichtigt jedoch nicht die in der DE 195 27 112 C1 angeschriebene Problematik, nach der aufgrund mannigfaltiger Alterungs- und Verschleißerscheinungen, beispielsweise in den Lagerungen, den Zahnradpaarungen und den Fahrzeugreifen eine hinreichend große Genauigkeit bei der Bestimmung des vom Verbrennungsmotor abgegebenen Antriebsdrehmomentes nicht mehr gegeben ist. Die DE 195 27 112 C1 offenbart darüber hinaus ein Verfahren zur Kalibrierung eines Kennfeldes eines Verbrennungsmotors, der als Bestandteil eines Hybridantriebes für ein Kraftfahrzeug mit einer elektrischen Antriebsmaschine koppelbar ist. Das vorgeschlagene Verfahren stellt darauf ab, die Festlegung des Kennfeldes auch dann vornehmen zu können, wenn der Verbrennungsmotor in dem Kraftfahrzeug eingebaut ist und stellt somit eine Alternative zu den üblichen Kennfeldfestlegungen auf Rollenprüfständen dar. Das vorgenannte Dokument behandelt nicht die Optimierung von Schaltvorgängen bei Fahrzeugen mit Hybridantrieb.

Üblicherweise werden für Gangwechsel bei Automatikgetrieben Kennfelder festgelegt, die beispielsweise die Fahrzeuggeschwindigkeit v_{F} , die Verbrennungsmotordrehzahl n_{V}, das Antriebsmoment des Verbrennungsmotors M_{V} und gegebenenfalls noch einige weitere Parameter, wie beispielsweise den Fahrpedalwinkel α_{F} oder dessen zeitliche Ableitung α_{F} /dt berücksichtigen. Zur Gewährleistung ruckfreier Schaltvorgänge ist eine möglichst genaue sensorische Erfassung der vorgenannten Zustandsgrößen erforderlich. Dies ist bei der Bestimmung von v_{F}, n_{V} und beispielsweise auch bei α_{F} oder d α_{F}/dt mit marktüblicher Sensortechnik ohne weiteres möglich. Dem gegenüber ist die Ableitung des Antriebsmomentes aus sensorischen Größen teilweise fehlerbehaftet, weil aufgrund von Temperatureinflüssen, teilweise komplexen Lastzuständen beim Betrieb von Nebenaggregaten und auch im Hinblick auf Alterungsvorgänge teilweise nur schwer reproduzierbare Verhältnisse vorliegen. Üblicherweise kann das Antriebsmoment eines Verbrennungsmotors beispielsweise aus wenigstens einer der Größen Luftmassendurchsatz, eingespritzte Kraftstoffmenge oder Drosselklappenwinkel abgeleitet werden. Da diese Größen aber lediglich Anhaltspunkte bieten und keine tatsächlichen Momentenmessung darstellen, ergeben sich aus den zuvor bereits genannten Gründen systembedingt Ungenauigkeiten, die auch Rückwirkungen auf die Qualität von Schaltvorgängen haben.

Vor diesem Hintergrund liegt der Erfindung die Aufgabe zugrunde, gattungsgemäße Verfahren derart weiterzubilden, dass über die gesamte Betriebsdauer eines Kraftfahrzeugs hinweg eine verbesserte Schaltqualität realisierbar ist.

Diese Aufgabe wird gelöst mit einem Verfahren gemäß den Merkmalen des Patentanspruchs 1. Die Unteransprüche betreffen besonders zweckmäßige Weiterbildungen dieses Verfahrens.

Erfindungsgemäß wird also abhängig von vorgegebenen Bedingungen eine Überprüfung des Antriebsmomentenwertes M_{V} vorgenommen, und zwar auf Basis wenigstens einer den Betriebszustand der Elektroantriebsmaschine charakterisierenden Größe. Diese Maßnahme basiert auf der erfinderseitigen Erkenntnis, dass das Kennfeld einer elektrischen Antriebsmaschine auch über sehr große Zeiträume extrem stabil ist und damit beispielsweise durch Strommessungen sehr präzise auf das jeweils an der Elektroantriebsmaschine wirkende Moment geschlossen werden kann. Für Elektroantriebsmaschinen, die auch im Generatorbetrieb arbeiten können, kann damit sowohl der Wert für die Abgabe eines Momentes als auch für die Beaufschlagung mit einem Moment aus dem Verbrennungsmotor eine exakte Momentenbestimmung vorgenommen werden.

Als vorgegebene Bedingung zur Durchführung einer solchen Überprüfung während des Betriebs des Kraftfahrzeuges können in vorteilhafter Weise Zustände genutzt werden, die ohnehin im normalen Fahrbetrieb auftreten. Ein solcher Zustand kann beispielsweise "Kupplung geöffnet" sein, wenn das Fahrzeug vor einer Kreuzung oder Ampelanlage stillsteht. Alternativ kann die Überprüfung auch eingeleitet werden, wenn im Fahrbetrieb die geschlossene Kupplung schlupffrei läuft. Dies kann durch Sensoren an der Kupplung zweifelsfrei festgestellt werden, wenn beispielsweise beim Wechsel vom Zugbetrieb auf den Schubbetrieb oder umgekehrt ein sogenanntes Nullmoment (also M_{V} = 0) wirkt.

Bevorzugt wird für die Überprüfung des Antriebsmomentenwertes M_{V} an der Elektroantriebsmaschine eine den Antriebsmomentenwert M_{E} repräsentierende Strommessung durchgeführt. Der auf diese Weise bestimmte Antriebsmomentenwert M_{E} der Elektroantriebsmaschine wird dann verglichen mit dem von dem Steuergerät abgeleiteten Antriebsmomentenwert M_{V} des Verbrennungsmotors. Wenn für den Unterschied zwischen dem sehr präzise bestimmten Wert M_{E} und dem systembedingt ungenaueren Wert M_{V} ein definierter Grenzwert überschritten wird, erfolgt im Steuergerät die Bestimmung eines Korrekturfaktors K, mit dem der üblicherweise sensorbasiert aus einem Berechnungsmodell ermittelte Antriebsmomentenwert M_{V} modifiziert wird.

Ausgehend von den Zusammenhängen, dass
1. Gangwechsel = f(v_{F}, n_{B}, M_{V}, α_{F} ,...)
2. M_{V} = K· f (S₁, S₂, , S_{N})
   mit
   S_{1-N} = Sensorsignale
3. K = f ([M_{E}-M_{B}] bei vorgegebenen Bedingungen)
ist, wird es mit der erfindungsgemäßen Überprüfung nun möglich, ein einmal in dem Steuergerät abgelegtes Kennfeld für Gangwechsel auch dann beibehalten zu können, wenn sich bei der Bestimmung des Antriebsmomentenwertes M_{V} aus unterschiedlichsten Gründen eine gewisse Drift ergeben sollte. Damit kann in vorteilhafter Weise eine Nachkalibrierung des Kennfeldes unterbleiben. Außerdem werden mit dem erfindungsgemäßen Verfahren deutlich bessere Schaltqualitäten erreicht. Zu berücksichtigen ist dabei auch, dass auf ohnehin bereits im Antriebsstrang befindliche Technik zurückgegriffen wird und keinerlei weiterer Aufwand für Sensorik zu betreiben ist. Hervorzuheben ist auch, dass das aus dem erfindungsgemäßen Verfahren abgeleitete Berechnungsmodell auf unterschiedlichste Verbrennungsmotor-Getriebe-Kombinationen anwendbar ist.

Das erfindungsgemäße Verfahren basiert damit auf einem völlig anderen Ansatz als das in der. DE 195 27 112 C1 beschriebene Verfahren. Dieses dient dazu mit vergleichsweise geringem Aufwand ein Kennfeld für einen Verbrennungsmotor zu erstellen. Dem gegenüber geht das erfindungsgemäße Verfahren von einem bereits bestehenden Kennfeld für Schaltvorgänge aus, bei dem lediglich eine für die Schaltpunktermittlung erforderliche Kenngröße wie der Antriebsmomentenwert M_{V} korrigiert wird, um dann auf Basis des so korrigierten Wertes im bestehenden Kennfeld zu dem für eine ordentliche Schaltqualität gewünschten Schaltpunkt zu gelangen.

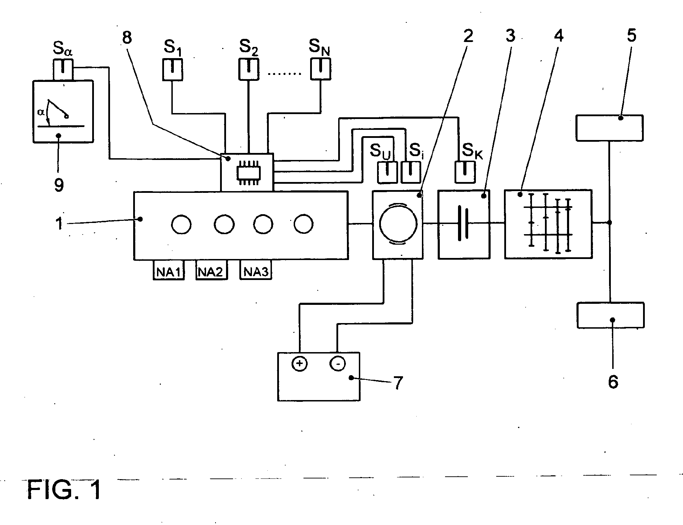

Zur Verdeutlichung des erfindungsgemäßen Verfahrens ist in der Zeichnung schematisch ein Antriebsstrang dargestellt, dessen wesentliche Komponenten hier ein Verbrennungsmotor 1, eine Elektroantriebsmaschine 2, eine Kupplung 3, ein Getriebe 4 und Räder 5, 6 sind. Die Elektroantriebsmaschine ist mit einer Batterie 7 verbunden und bildet mit dem Verbrennungsmotor 1 zusammen einen so genannten Parallelhybrid-Antrieb. Die Elektroantriebsmaschine 2 kann sowohl motorisch als auch generatorisch betrieben werden, so dass sie über eine Antriebsfunktion für das Fahrzeug hinaus auch als Anlasser für den Verbrennungsmotor 1 oder als Lichtmaschine für das Bordnetz des hier nicht weiter dargestellten Fahrzeuges fungieren kann. Zum Verbrennungsmotor 1 gehören hier auch symbolisch angedeutete Nebenantriebe, wobei beispielsweise NA1 eine Klimaanlage, NA2 eine Wasserpumpe und NA3 eine Pumpe für eine Servolenkung sein kann. Im Hinblick auf die Umsetzung des erfindungsgemäßen Verfahrens kann die Art und die Anzahl der Nebenantriebe abweichend von der in der Zeichnung ersichtlichen Skizze unterschiedlich sein.

Von besonderer Bedeutung für die Umsetzung des erfindungsgemäßen Verfahrens ist ein Steuergerät 8, das für die Bestimmung des Antriebsmomentenwertes des Verbrennungsmotors 1 beispielsweise von Sensoren S₁ bis S_{N} beaufschlagbar ist. Darüber hinaus erhält das Steuergerät 8 auch Signale von Sensoren Sᵤ und Sᵢ, die der Elektroantriebsmaschine 2 zugeordnet sind. Der Zustand der Kupplung 3 wird mit einer Sensoreinrichtung Sₖ überwacht, deren Signale ebenfalls dem Steuergerät 8 zugeführt werden. Nicht weiter dargestellt sind ferner noch Sensoren, die beispielsweise dem Getriebe 4 zugeordnet sind, aus denen dann die Drehzahl des Verbrennungsmotors 1 oder die Fahrzeuggeschwindigkeit bestimmt werden kann. Mit 9 ist schließlich ein bevorzugt elektronisch arbeitendes Fahrpedal (so genanntes E-Gas) bezeichnet, das ebenfalls mit dem Steuergerät 8 signalverbunden ist.

Die in der Zeichnung schematisch angegebenen Komponenten und Sensoreinrichtungen sind marktübliche Bestandteile bei Hybridanordnungen und bedürfen daher hinsichtlich ihrer Funktionsweise keiner näheren Erläuterungen. Diese Bestandteile werden allerdings geschickt genutzt, in dem beispielsweise über die Sensoreinrichtung S_{K} festgestellt werden kann, ob die Durchführung einer Überprüfungsroutine möglich ist. Dazu liefert die Sensoreinrichtung S_{K} die Meldungen "Kupplung 3 geöffnet" oder "geschlossene Kupplung 3 läuft schlupffrei". Um hier zu möglichst kurzen Reaktionszeiten zu gelangen, kann beispielsweise der vom Steuergerät 8 ausgehende Befehl zur Öffnung der Kupplung bereits genutzt werden, um die für den eigentlichen Überprüfungsvorgang notwendigen Schritte schon vorzubereiten. Sobald die vorgeschriebenen Kupplungszustände erreicht sind, gibt die Sensoreinrichtung S₁ mittels einer Strommessung dem Steuergerät 8 an, welches Moment an der Elektroantriebsmaschine 2 wirkt. Da bei geöffneter Kupplung 3 kein Antriebsmoment auf die Räder 5 und 6 weitergegeben wird, arbeitet der Verbrennungsmotor 1 im Leerlauf nur gegen Schleppmomente, die aus noch rotierenden trägen Massen, der inneren Reibung des Verbrennungsmotors 1, dem Antrieb von Nebenaggregaten oder der Elektroantriebsmaschine 2 resultieren können. Der aus den Sensoren S₁ bis Sₙ abgeleitete Antriebsmomentenwert M_{V} wird nun verglichen mit dem durch den Sensor S₁ bestimmten Antriebsmomentenwert M_{E} der Elektroantriebsmaschine.

Stellt sich bei diesem Vergleich heraus, dass der Differenzbetrag M_{V} - M_{E} einen vorgegebenen Grenzwert überschreitet, wird auf der Basis des ermittelten Differenzbetrages ein Korrekturfaktor K bestimmt, mit dem im Steuergerät 8 dann der Antriebsmomentenwert M_{V} modifiziert wird. Mit dem so modifizierten Antriebsmomentenwert M_{V} ermittelt das Steuergerät 8 auf Basis eines festgelegten Schaltkennfeldes zusammen mit weiteren Kenngrößen den für eine optimale Schaltung erforderlichen Schaltpunkt.

Das vorgeschriebene Verfahren kann je nach Bedarf entweder jedes Mal dann durchgeführt werden, wenn beispielsweise die Kupplung 3 geöffnet ist. Vorstellbar ist aber auch die Vorgabe von Überprüfungsintervallen, so dass nur nach einer bestimmten Anzahl von Öffnungen der Kupplung 3 wieder eine Überprüfung eingeleitet wird.

## Patentansprüche

1. Verfahren zur Steuerung eines Antriebsstranges eines Kraftfahrzeuges, der als Komponenten zumindest einen Verbrennungsmotor (1), eine Elektroantriebsmaschine (2), eine Kupplung (3) und ein mit Antriebsrädern (5, 6) verbindbares Getriebe (4) aufweist,
mittels wenigstens eines Steuergerätes (8), das
- von Sensoreinrichtungen (S_{1-N}, Sᵤ, Sᵢ, Sₖ, S_{α}) zur Erfassung unterschiedlicher Zustandsgrößen des Kraftfahrzeuges und/oder wenigstens einer der Komponenten des Antriebsstranges beaufschlagbar ist,
- zur Steuerung von Gangwechseln mittels wenigstens eines in dem Steuergerät (8) abgelegten Kennfeldes einen Antriebsmomentenwert M_{V} des Verbrennungsmotors (1) verwertet, der zumindest mittelbar aus Signalen der Sensoreinrichtungen (S_{1-N}) abgeleitet ist,
- den Betriebszustand der Elektroantriebsmaschine (2) während des Betriebes des Verbrennungsmotors (1) erfasst,
**dadurch gekennzeichnet, dass** während des Betriebes des Kraftfahrzeuges
- abhängig von vorgegebenen Bedingungen eine Überprüfung des Antriebsmomentenwertes M_{V} vorgenommen wird,
- die Überprüfung auf Basis wenigstens einer den Betriebszustand der Elektroantriebsmaschine (2) charakterisierenden Größe durchgeführt wird.

2. Verfahren nach Anspruch 1, **dadurch gekennzeichnet, dass** als vorgegebene Bedingung der Zustand "Kupplung (3) geöffnet" vorgesehen ist.

3. Verfahren nach Anspruch 1 oder 2, **dadurch gekennzeichnet, dass** als vorgegebene Bedingung der Zustand "geschlossene Kupplung (3) läuft schlupffrei" vorgegeben ist.

4. Verfahren nach wenigstens einem der Ansprüche 1 bis 3, **dadurch gekennzeichnet, dass** als vorgegebene Bedingung der Betriebszustand eines Nebenaggregates erfasst wird, beispielsweise einer Klimaanlage und/oder einer Pumpe für eine Servolenkung und/oder einer Ölpumpe und/oder einer Wasserpumpe.

5. Verfahren nach wenigstens einem der Ansprüche 1 bis 4, **dadurch gekennzeichnet, dass** die Elektroantriebsmaschine (2) wahlweise als Motor oder Generator betrieben wird.

6. Verfahren nach wenigstens einem der Ansprüche 1 bis 5, **dadurch gekennzeichnet, dass** für die Überprüfung an der Elektroantriebsmaschine (2) eine deren Antriebsmomentenwert M_{E} repräsentierende Strommessung durchgeführt wird.

7. Verfahren nach wenigstens einem der Ansprüche 1 bis 6, **dadurch gekennzeichnet, dass** aus dem während der Überprüfung erfassten Antriebsmomentenwert M_{E} ein Korrekturfaktor K für den Antriebsmomentenwert M_{V} ermittelt wird, wenn als Ergebnis der Überprüfung für den Unterschied zwischen M_{E} und M_{V} ein definierter Grenzwert überschritten wird.

8. Verfahren nach wenigstens einem der Ansprüche 1 bis 7, **dadurch gekennzeichnet, dass** der Antriebsstrang als Parallelhybrid ausgeführt ist.

9. Verfahren nach Anspruch 1, **dadurch gekennzeichnet, dass** das Getriebe als Doppelkupplungsgetriebe ausgeführt ist.

## Claims

1. Method for controlling a drive train of a motor vehicle which, as components, has at least one internal combustion engine (1), an electric drive machine (2), a clutch (3) and a transmission (4) which can be connected to drive wheels (5, 6), by means of at least one controller (8) which
- can be acted on by sensor devices (S_{1-N}, Sᵤ, Si, Sₖ, S_{α}) for detecting different state variables of the motor vehicle and/or at least one of the components of the drive train,
- evaluates a drive torque value M_{V} of the internal combustion engine (1), which drive torque value is derived at least indirectly from signals of the sensor devices (S_{1-N}), for controlling gear changes by means of at least one characteristic map which is stored in the controller (8),
- detects the operating state of the electric drive machine (2) during operation of the internal combustion engine (1),
**characterized in that**
- the drive torque value M_{V} is checked as a function of predefined conditions, and
- the check is carried out on the basis of at least one variable which characterizes.the operating state of the electric drive machine (2) during operation of the motor vehicle.

2. Method according to Claim 1, **characterized in that** the state "clutch (3) open" is provided as a predefined condition.

3. Method according to Claim 1 or 2, **characterized in that** the state "closed clutch (3) runs without slipping" is predefined as a predefined condition.

4. Method according to at least one of Claims 1 to 3, **characterized in that** the operating state of an auxiliary unit, for example of an air-conditioning system and/or of a pump for a power steering system and/or of an oil pump and/or of a water pump, is detected as a predefined condition.

5. Method according to at least one of Claims 1 to 4, **characterized in that** the electric drive machine (2) is selectively operated as a motor or a generator.

6. Method according to at least one of Claims 1 to 5, **characterized in that**, for the check, a current measurement is carried out on the electric drive machine (2), this current measurement representing the drive torque value M_{E} of the said electric drive machine.

7. Method according to at least one of Claims 1 to 6, **characterized in that** a correction factor K for the drive torque value M_{V} is determined from the drive torque value M_{E}, which is detected during the check, when a defined limit value is exceeded as a result of the check for the difference between M_{E} and M_{V}.

8. Method according to at least one of Claims 1 to 7, .**characterized in that** the drive train is in the form of a parallel hybrid.

9. Method according to Claim 1, **characterized in that** the transmission is in the form of a double-clutch transmission.

## Revendications

1. Procédé de commande d'une chaîne de transmission d'un véhicule automobile, laquelle présente comme composants au moins un moteur à combustion interne (1), un groupe propulseur électrique (2), un accouplement (3) et une boîte de vitesses (4) qui peut être reliée avec les roues motrices (5, 6), au moyen d'au moins un module de commande (8) qui
- peut être alimenté par des dispositifs de détection (S_{1-N}, Sᵤ, Si, Sₖ, S_{α}) pour acquérir différentes grandeurs d'état du véhicule automobile et/ou d'au moins un composant de la chaîne de transmission,
- pour commander les changements de rapport, évalue une valeur du couple d'entraînement M_{V} du moteur à combustion interne (1) au moyen d'au moins un diagramme caractéristique stocké dans le module de commande (8), valeur qui est déduite au moins indirectement à partir des signaux des dispositifs de détection (S_{1-N}),
- détecte l'état opérationnel du groupe propulseur électrique (2) pendant le fonctionnement du moteur à combustion interne (1),
**caractérisé en ce que** pendant le fonctionnement du véhicule automobile,
- un contrôle de la valeur du couple d'entraînement M_{V} est effectué en fonction de conditions prédéfinies,
- le contrôle est réalisé sur la base d'au moins une grandeur qui caractérise l'état opérationnel du groupe propulseur électrique (2).

2. Procédé selon la revendication 1, **caractérisé en ce que** la condition prédéfinie prévue est l'état « accouplement (3) ouvert ».

3. Procédé selon la revendication 1 ou 2, **caractérisé en ce que** la condition prédéfinie prévue est l'état « accouplement (3) fermé tournant sans patiner ».

4. Procédé selon l'une des revendications 1 à 3, **caractérisé en ce que** la condition prédéfinie prévue détectée est l'état opérationnel d'un groupe auxiliaire, par exemple un équipement de climatisation et/ou une pompe pour une direction assistée et/ou une pompe à huile et/ou une pompe à eau.

5. Procédé selon l'une des revendications 1 à 4, **caractérisé en ce que** le groupe propulseur électrique (2) est utilisé au choix comme un moteur ou comme un générateur.

6. Procédé selon l'une des revendications 1 à 5, **caractérisé en ce que** le contrôle du groupe propulseur électrique (2) est effectué en mesurant le courant représentant la valeur de son couple d'entraînement M_{E}.

7. Procédé selon l'une des revendications 1 à 6, carac.térisé en ce qu'un facteur de correction K de la valeur du couple d'entraînement M_{V} est déterminé à partir de la valeur du couple d'entraînement M_{E} acquise pendant le contrôle si le résultat du contrôle de la différence entre M_{E} et M_{V} est le dépassement d'une valeur limite définie.

8. Procédé selon l'une des revendications 1 à 7, **caractérisé en ce que** la chaîne de transmission est réalisée sous la forme d'un système hybride parallèle.

9. Procédé selon la revendication 1, **caractérisé en ce que** la boîte de vitesses est réalisée sous la forme d'une boîte de vitesses à double accouplement.
